# FASCICULE DE BREVET EUROPEEN

(11) **EP 2 118 537 B1**
(45) Date de publication et mention de la délivrance du brevet: **28.06.2017**
(21) Numéro de dépôt: 08775581.5
(22) Date de dépôt: 21.02.2008
(51) Int. Cl.: F16K 1/38, F16K 51/00, F16J 15/00, F16K 1/12, F16K 1/42

(54) **ENSEMBLE DE VIDANGE A OUVERTURE VERS LE HAUT ET A SIEGE PLAT SANS ZONES DE RETENTION POUR REACTEUR CHIMIQUE EMAILLE**
ABFLUSSVORRICHTUNG, AUFWÄRTSÖFFNUNG UND BUNDDICHTUNG OHNE RETENTIONSFLÄCHEN FÜR EINEN EMAILLIERTEN CHEMISCHEN REAKTOR
DRAINAGE ASSEMBLY WITH UPWARD OPENING AND FLAT SEAT WITHOUT RETENTION AREAS FOR ENAMELLED CHEMICAL REACTOR

(30) Priorité: 21.02.2007 FR 0701223
(43) Date de publication de la demande: 18.11.2009
(73) Titulaire: DE DIETRICH, 67110 Niederbronn-les-Bains (FR)
(72) Inventeur: GLAD, Roger, F-67110 Gumbrechtshoffen (FR); SCHMIDT, Rémy, F-67340 Offwiller (FR)
(74) Mandataire: Merckling, Norbert
(86) Numéro de dépôt international: PCT/FR2008/000225
(87) Numéro de publication internationale: WO 2008/122710

(56) Documents cités:
- EP-A- 0 462 382
- EP-A- 1 176 348
- GB-A- 2 040 566
- US-A- 4 822 570
- US-A1- 2004 021 121

## Description

La présente invention se rapporte à un ensemble de vidange présentant une vanne du type à ouverture vers le haut plus particulièrement pour des réacteurs chimiques émaillés.

Sa particularité consiste à comporter deux faces planes enserrant un siège plat pour la tête de la soupape procurant l'étanchéité de fermeture et l'écoulement total en ouverture. L'invention peut se monter à la sortie de tous les réacteurs aussi bien neufs qu'existants.

Dans le type de réacteurs visés par l'invention, la tête de l'élément mobile de soupape des ensembles de vidange est logée dans l'espace d'évacuation de l'orifice de vidange de manière à dégager la section de sortie lorsque l'élément mobile de l'ensemble de vidange se trouve en position haute d'ouverture.

Classiquement, en position de fermeture, cette tête vient reposer sur un siège en matière synthétique chimiquement résistante, par exemple en PTFE.

Ainsi, selon la technique antérieure, ce siège est conformé dans la partie supérieure d'une pièce d'étanchéité à corps tubulaire et à base circulaire formant un épaulement périphérique de butée et de maintien. Cette pièce d'étanchéité sert dans sa partie haute de siège à l'élément mobile de l'ensemble d'étanchéité et dans sa partie basse à épaulement, de surface d'étanchéité contre la partie saillante de la tubulure de l'orifice de vidange. La partie tubulaire est introduite dans la tubulure d'évacuation de l'orifice de vidange. Elle est adaptée au diamètre de cette tubulure d'évacuation et s'y trouve maintenue en butée de pénétration par son épaulement.

Par son autre face, cette pièce tubulaire de siège et d'étanchéité se trouve plaquée à étanchéité contre le bord supérieur en bride du corps de l'ensemble de vidange.

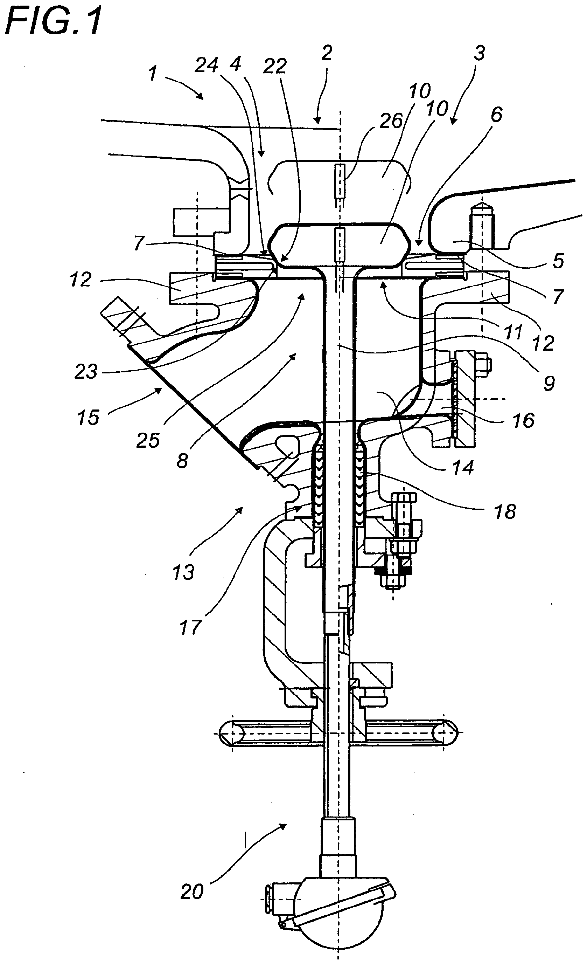

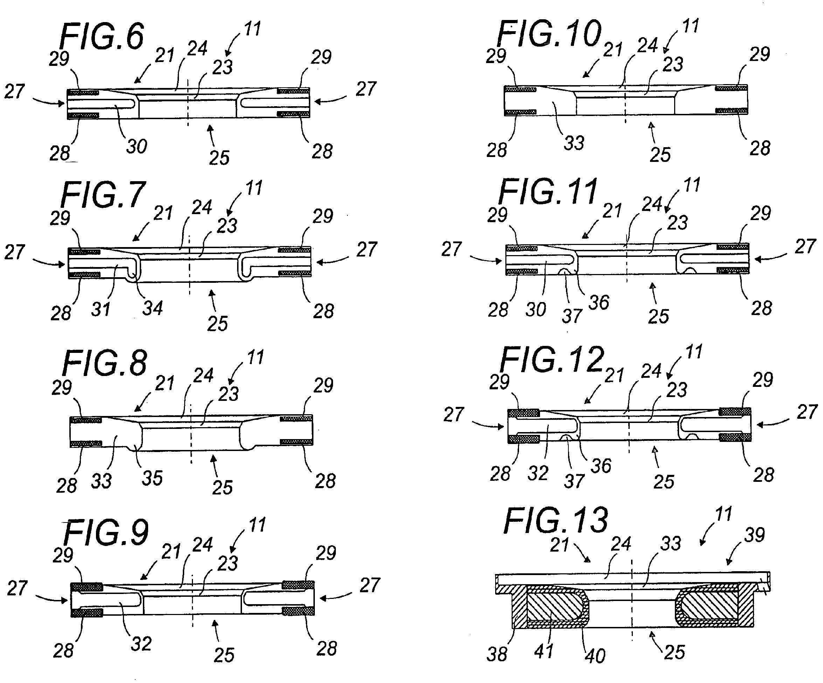

La publication de la demande américaine n° US2004/0021121 dont l'inventeur est Monsieur Douglas A. Newberg se rapporte à un ensemble d'obturation d'un réservoir ou d'une cuve en vue de son vidage ou de sa vidange. On y décrit et on y a représenté un dispositif d'obturation à soupape commandé par un ensemble mécanique. Sur les premières figures c'est-à-dire les figures 1 à 6 et la figure 9, la tête de soupape vient obturer l'orifice par le bas par un mouvement ascendant ce qui n'est pas conforme à une sécurité positive car la pression vient d'en haut par le poids du liquide contenu. De plus, le siège de la tête et de son siège présente un profil conique tout à fait classique. Il peut donc se produire tous les problèmes liés à la rétention indiqués dans la description. Par ailleurs ce type d'ensemble n'est nullement prévu pour être monté sur différents type de sorties de réacteurs émaillés neufs ou actuellement en service. Concernant les réalisations des figures 7 et 8, si la tête de soupape et arrive en fermeture par un mouvement vers le bas soit, la tête de soupape doit être équipé d' un joint périphérique sur sa bordure de sous face pour garantir l'étanchéité (figure 7) soit présenter un profil particulier en raison de la forte pente de la partie centrale de l'orifice. De plus comme précédemment le montage mécanique de cet ensemble de vidage ne permet pas son montage et démontage faciles et un échange rapide sur les réacteurs existant actuellement.

La publication GB 2040566 au nom de TYCON ne porte que sur un capteur pour vérifier en permanence la qualité de l'émail. Dans la présente invention, la tête de soupape est particulière et fait partie d'un ensemble démontable. Le capteur est situé à l'intérieur.

Cette technique antérieure présente plusieurs inconvénients importants.

Le premier inconvénient est lié à la rétention de produit existant dans l'interstice situé entre le siège et la tubulure de vidange. Ceci provoque une contamination croisée des produits de deux utilisations successives du réacteur. En effet, l'ajustement entre la pièce de siège et d'étanchéité et la tubulure d'évacuation n'est pas parfait et dans le faible volume existant entre cette pièce et la surface latérale intérieure de la tubulure d'évacuation de l'orifice de sortie vient pénétrer du produit de la réaction en cours.

Ce faible volume est quasi inaccessible, rendant difficile, voire impossible, la pénétration des produits de nettoyage et de désinfection, si bien que ce liquide restant, constitue une source de contamination croisée entre les deux produits de deux réactions successives, peu souhaitable et même contre indiquée notamment dans les industries alimentaires et pharmaceutiques.

De plus, le produit prisonnier dans cet interstice peut cristalliser conduisant à de sérieuses difficultés lors du démontage de la vanne avec comme conséquence un fort risque de détérioration du revêtement en émail.

La présente invention a pour but de remédier à ces principaux inconvénients.

Le bénéfice premier de cette invention concerne l'absence totale de contamination croisée provenant des surfaces lisses et exemptes d'interstices, absence de contamination liée à la disparition des volumes cachés difficiles d'accès pour le nettoyage et la désinfection.

Par ailleurs, l'ensemble de vidange selon l'invention peut se monter sur tous les types de réacteurs courants, neufs ou existants, à sortie répondant aux règles générales de normalisation, indépendamment de leur particularité de conformation, qu'il s'agisse de sorties à tubulure de vidange ou de sorties dites à bride épaisse.

Il suffit de changer le siège et l'élément mobile de soupape dans l'ensemble mécanique inférieur pour obtenir un ensemble de vidange à soupape dont le siège est à écoulement total, supprimant ainsi la zone de rétention et les problèmes et conséquences y relatifs notamment ceux liés à la contamination et/ou à la cristallisation du produit provoquant des difficultés de démontage et un risque sensible de détérioration de l'émail.

De plus et bien entendu, l'invention permet de monter ce type d'ensembles de vidange sur les réacteurs neufs. Il suffit de prévoir un siège d'étanchéité adapté à la conformation de la tête de soupape correspondante.

En résumé, l'invention procure les avantages cumulés de l'écoulement total, de l'absence de zone morte, de la facilité de nettoyage et de démontage, et du montage possible sur tous les types de réacteurs notamment émaillés.

D'autres caractéristiques et avantages de l'invention apparaîtront à la lecture de la description détaillée qui va suivre, description faite en référence aux dessins annexés, dans lesquels :
- la figure 1 est une vue générale en coupe longitudinale dont la partie supérieure est en deux demi-coupes se rapportant à deux variantes, cette figure montrant sur une seule vue deux exemples d'ensembles de vidange pour un réacteur chimique selon la présente invention,
- les figures 2 et 3 sont des vues en coupe verticale au niveau de l'élément mobile et du siège de l'ensemble de vidange selon l'invention dans le cas d'un réacteur chimique à tubulure classique,
- les figures 4 et 5 sont des vues en coupe verticale au niveau de l'élément mobile et du siège de l'ensemble de vidange selon l'invention dans le cas d'un réacteur chimique à bride épaisse,
- les figures 6 à 13 sont des coupes transversales schématiques de variantes de pièces de siège et d'étanchéité pouvant équiper l'ensemble de vidange selon l'invention.

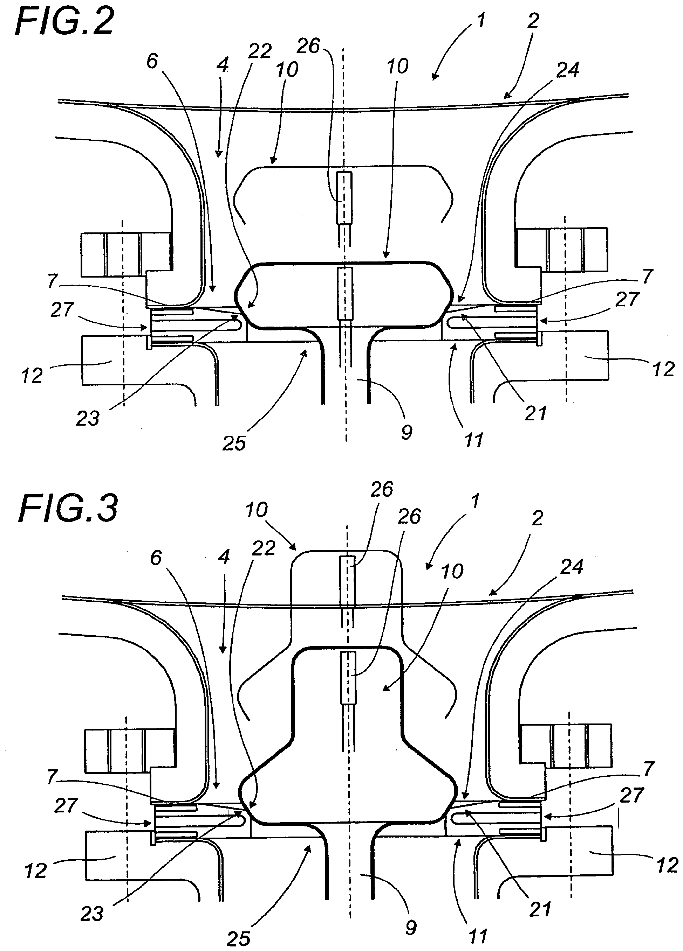

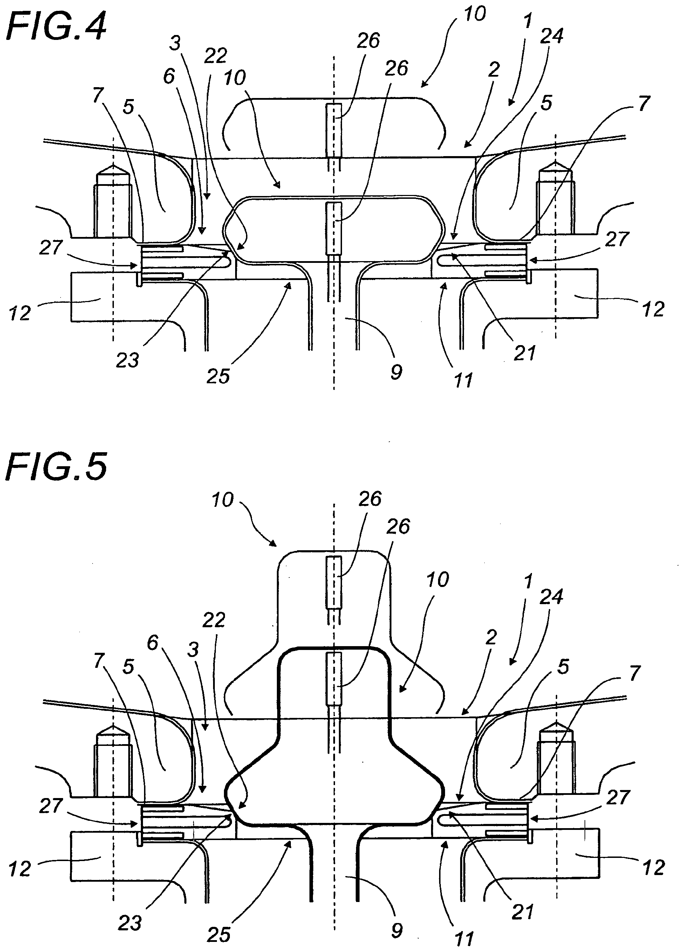

Un réacteur chimique et plus particulièrement un réacteur chimique du type émaillé, comprend un fond 1 présentant un orifice 2 de vidange ou de vidage se poursuivant vers le bas par un canal cylindrique de vidange 3 (figure 1) appelé lorsqu'il est long, tubulure de vidange 4 (figures 2 et 3) et lorsqu'il est plus court, canal de bride épaisse délimité par la paroi interne d'une bride épaisse 5 (figures 4 et 5), et débouchant vers l'extérieur par un orifice extérieur de sortie 6 délimité par un retour annulaire formant une face frontale 7 qui peut être celle de la tubulure de vidange ou celle de la bride épaisse 5.

Pour des raisons de commodité on appellera ci-après structure d'orifice de sortie la partie d'extrémité de cette tubulure 4 ou de cette bride épaisse 5.

L'orifice extérieur de sortie 6 est obturé par une soupape mobile 8 formée d'une tige 9 et d'une tête 10.

Une pièce amovible 11 de siège et d'écoulement total vient s'appliquer à étanchéité sur la face frontale 7 délimitant l'orifice extérieur de sortie 6 en se plaquant contre celle-ci s'agissant de la variante à tubulure 4 ou de celle à bride épaisse 5 et ceci grâce à un montage mécanique puis à un serrage comme on le verra ci-après.

La pièce amovible 11 est, dans le mode de réalisation représenté, un joint annulaire plat de préférence épais, servant d'étanchéité et de siège à la tête 10 de soupape et d'évacuation totale du produit contenu. Elle est réalisée en une matière chimiquement inerte et résistante par exemple connue sous le sigle PTFE.

Une contre-pièce de montage 12 par exemple sous la forme générale d'une bride de montage vient prendre la pièce de siège 11 en sandwich contre la face frontale 7 du retour annulaire de sortie pour l'enserrer par l'intermédiaire d'un montage mécanique par exemple à boulons qui, en réalisant ainsi l'immobilisation et la compression, procure l'étanchéité par rapport à l'extérieur.

La bride de montage 12 permet aussi la fixation du corps mécanique 13 de l'ensemble de vidange. Elle fait partie de ce corps mécanique 13 dans lequel est logé l'ensemble de vidange. Il renferme une chambre de sortie 14 à sortie principale latérale 15 et éventuellement un accès latéral technique 16 ainsi que vers le bas, un guide étanche 17 de la tige 9 de soupape de la vanne garni d'un presse-étoupe 18.

La soupape se poursuit vers le bas par un mécanisme d'actionnement 20 pouvant prendre différentes formes mécaniques. On a représenté sur la figure 1 un mécanisme d'actionnement manuel de la soupape entre une position haute dans laquelle elle est ouverte et une position basse dans laquelle elle est fermée par appui étanche sur son siège.

L'invention ne se limite pas à ce type d'ensemble mécanique ou de mécanisme d'actionnement. Elle permet dans le cas des réacteurs chimiques existants, de monter un nouvel ensemble de vidange par simple montage de remplacement.

La pièce de siège 11 affecte sur sa partie supérieure une conformation en creux ou en évidemment convergeant centralement vers le bas servant au contact d'étanchéité avec la tête 10 de soupape et à l'écoulement total.

Cet évidemment peut être à simple ou à double rampe par exemple conique dont une rampe de bordure intérieure de petite largeur utilisée pour l'étanchéité et une rampe d'écoulement total de plus grande largeur entourant concentriquement la première. Ces deux rampes présentent des pentes différentes, moyenne pour la rampe de bordure intérieure et plus faible pour l'autre rampe.

Il s'agit dans cet exemple, d'un évidemment conique 21 dont une partie coopère avec une surface conique d'appui correspondante 22 que la tête 10 de soupape présente à sa base et qui vient porter à étanchéité en position de fermeture sur la partie correspondante de la surface de réception conique 21 de la pièce de siège 11.

Plus particulièrement, l'évidement conique 21 est un évidemment à double rampe conique concentrique formé du centre vers l'extérieur d'abord par un épaulement conique 23 coopérant avec la surface conique d'appui correspondante 22 de la tête 10 de soupape en vue de la fermeture étanche. Il s'agit ensuite, d'une rampe conique 24 à plus faible pente que l'épaulement 23 permettant l'écoulement total du produit. Cette rampe débute à la périphérie de l'épaulement 23 et s'étend par exemple, jusqu'au voisinage du, ou jusqu'au, bord périphérique intérieur de l'orifice de sortie 6.

Bien entendu, la pièce 11, conformée en évidemment conique 21, délimite une ouverture centrale circulaire 25 pour le passage d'évacuation du produit.

Il convient de préciser ici que l'évidemment conique 21 peut très bien n'être qu'à simple rampe et qu'il est concentrique à l'ouverture 25.

La pièce 11 est essentiellement plate et épaisse et ne présente aucune prolongation centrale vers le haut comme dans l'état antérieur de la technique.

Un éventuel rebord de protection peut exister selon les variantes comme on le verra ci-après.

Pour montrer les nombreuses possibilités d'application de l'invention sur différents types de sortie de réacteurs, on a représenté sur les figures 1 à 5 les deux cas principaux de types de conformation de sortie des réacteurs existants à savoir une sortie d'un réacteur avec tubulure classique et une sortie avec une bride épaisse 5.

Dans un cas, le canal 4 formant la tubulure de vidange est assez long, alors que dans l'autre cas, il est notablement plus court, car il s'agit de la variante à bride épaisse 5.

Selon une variante, on réalise la tête 10 de soupape 8 plus haute pour qu'elle occupe le plus de place possible dans la tubulure de vidange du réacteur. A cet effet, sa surface d'extrémité supérieure vient dans la position fermée à niveau avec le fond 1 du réacteur.

Un capteur par exemple de température 26 est placé dans la tête 10 de soupape, de préférence près de son extrémité supérieure. Il permet de connaître la température au niveau du fond 1 du réacteur du produit contenu dans celui-ci et non plus uniquement la température du produit dans le volume dormant juste en dessous et au niveau de l'orifice de vidange.

Les figures 6 à 13 montrent différentes variantes de la pièce 11 de siège.

Toutes les variantes présentent l'ouverture centrale circulaire telle que 25 pour le passage du produit et son évacuation totale lors de la vidange.

Il s'agit d'une pièce 11 annulaire et plate de consistance semi-rigide et chimiquement résistante, présentant une périphérie renforcée sur chacune de ses faces principales par exemple sous la forme de zones annulaires inférieures et supérieures plus denses ou de zones formées d'une matière moins souple rapportée ou coextrudée. Ces zones annulaires sont plus ou moins épaisses selon les variantes. Elles forment des joints intégrés en constituant des surfaces de portée avec la face frontale 7 de la bride de sortie du réacteur ou du retour périphérique bordant l'orifice extérieur de sortie 6 de celui-ci et la contre-pièce de montage 12. La contrainte mécanique procurée par le montage serré de ces deux brides enserrant le joint plat que constitue la pièce 11 annulaire, permet de garantir l'immobilisation de cette pièce et l'étanchéité.

Ces surfaces de portée peuvent être réalisées sous la forme d'une armature annulaire extérieure 27 par exemple métallique. Il peut s'agir de deux joints plats intégrés ou amovibles 28 et 29, garnissant en périphérie les faces inférieure et supérieure de la pièce de siège.

Chacune des variantes présente, conformée dans sa face supérieure, l'évidemment conique 21 dont la partie inférieure centrale en épaulement conique 23 sert de siège pour l'étanchéité de la soupape. Cette partie centrale est entourée d'une rampe conique 24 de plus faible pente pour l'écoulement total.

La conformation intérieure de cette pièce de siège 11 est variable.

Elle peut comporter une âme métallique 30, 31 sous la forme d'une rondelle annulaire de différentes formes ou une pièce annulaire 32 telle que représentée ou un volume plein tel que 33 sans insert, pour les variantes des figures 8 et 10.

D'autres différences existent entre les variantes.

La sous face peut comporter un rebord intérieur saillant 34 (figure 7) ou 35 (figure 8) provenant d'un bourrelet.

D'autres variantes (figures 11 et 12) présentent un rebord inférieur non saillant 36 mais délimité par une gorge telle que 37.

La dernière variante représentée sur la figure 13 concerne notamment les sièges avec âme élargie. Elle comporte une couronne ou un cerclage périphérique métallique pare-flamme 38 se prolongeant vers le haut par un rebord supérieur en épaulement 39 formant un élargissement. Cette couronne pare-flamme 38 est destinée à prolonger la durée de maintien de l'étanchéité de l'élément de vidange en évitant une exposition directe aux flammes en cas d'incendie. Cette couronne métallique est matérialisée sous la forme d'une bande périphérique métallique par exemple à rebord supérieur 39 qui peut exister sur toutes les autres variantes.

Ce joint plat présente par exemple un corps annulaire 40 à âme 41.

## Revendications

1. Ensemble interchangeable et universel de fermeture et de vidange pouvant être monté sur l'extérieur de l'orifice de sortie (6) délimité par une surface frontale (7) pour un réacteur chimique émaillé neuf ou existant du type à sortie à bride épaisse (5) ou du type à sortie avec tubulure (4), à monter sur la structure extérieure de cet orifice de sortie (6) ensemble de fermeture comprenant une vanne comportant une soupape (8) à tête (10) ouvrant par un mouvement vers le haut de sa tête pour le vidage ou la vidange du contenu du réacteur, la tête (10) de la soupape (8) venant fermer l'orifice de sortie (6) après son déplacement vers le bas par appui d'étanchéité de la base inférieure de la tête (10) de soupape sur une pièce amovible (11) de siège d'étanchéité et d'écoulement total qui est annulaire et plate, et à ouverture centrale et à conformation centrale en creux selon un évidement (21), cette pièce amovible (11) de siège, d'étanchéité et d'écoulement total venant se plaquer à étanchéité contre la face frontale (7) délimitant l'extérieur de l'orifice de sortie (6) par l'intermédiaire d'une contre-pièce de montage (12) venant placer la pièce de siège (11) contre la face frontale (7) délimitant l'orifice extérieur de sortie (6) pour l'enserrer selon un montage mécanique en vue de réaliser simultanément son immobilisation et l'étanchéité par rapport à l'extérieur ainsi que la fixation sous l'orifice (6), la pièce amovible (11) de siège, d'étanchéité et d'écoulement total étant réalisée sous la forme d'un joint annulaire plat à ouverture centrale (25) pour l'écoulement total dont la partie supérieure présente une conformation en creux comportant au moins une surface convergeant centralement vers le bas à au moins une pente et formant un évidement central en contact d'étanchéité, en position d'obturation, avec la tête (10) de soupape, **caractérisé en ce que** la sous face de la structure de l'orifice de sortie (6) formant une surface frontale (7) et la surface de la face supérieur du corps de l'ensemble de vidange sont planes, **en ce que** la conformation en creux du joint plat annulaire formant la pièce amovible (11) de siège, d'étanchéité et d'écoulement total est un évidement conique (21) à deux rampes coniques successives et concentriques présentant du bas vers le haut, une première rampe (23) et une deuxième rampe (24) descendantes de leur périphérie vers l'ouverture centrale (25), la deuxième rampe (24) étant destinée à assurer l'écoulement total et **en ce que** la première rampe est de pente plus forte, et forme un épaulement qui délimite intérieurement l'ouverture centrale (25), cette première rampe étant destinée à assurer la fermeture d'étanchéité par contact avec une zone de la périphérie inférieure extérieure de la tête de soupape (10).

2. Ensemble selon la revendication précédente, **caractérisé en ce que** la première rampe (23) délimitant intérieurement l'ouverture centrale (25) est de largeur inférieure à celle de la deuxième rampe (24).

3. Ensemble selon l'une quelconque des revendications précédentes, **caractérisé en ce que** la zone de contact d'étanchéité entre la conformation en évidemment conique (21) de la pièce amovible de siège (11) d'étanchéité et d'écoulement total et la périphérie inférieure extérieure de la tête (10) de soupape ne s'étend que sur une partie de celle-ci.

4. Ensemble selon l'une quelconque des revendications précédentes, **caractérisé en ce que** la tête (10) de soupape de l'ensemble de vidange présente à sa base une surface conique (22), qui vient porter à étanchéité sur la première rampe (23) de la pièce amovible (11) de siège, d'étanchéité et d'écoulement total.

5. Ensemble selon l'une quelconque des revendications précédentes, **caractérisé en ce que** la double rampe conique se compose d'un épaulement conique central formant le bord supérieur de l'ouverture centrale (25) recevant à contact d'étanchéité la partie extérieure inférieure de la tête (10) de soupape, cet épaulement conique central étant entouré concentriquement par une conformation conique (24) de plus faible pente formant une rampe d'écoulement total.

6. Ensemble selon l'une quelconque des revendications précédentes, **caractérisé en ce que** la pièce amovible (11) de siège, d'étanchéité et d'écoulement total présente une armature annulaire interne (30).

7. Ensemble selon l'une quelconque des revendications précédentes, **caractérisé en ce que** la pièce amovible (11) de siège, d'étanchéité et d'écoulement total présente une armature annulaire externe (27) sous la forme de zones renforcées ou de rondelles périphériques, une sur chacune de ses faces supérieure et inferieure.

8. Ensemble selon l'une quelconque des revendications précédentes, **caractérisé en ce que** la tête (10) de l'élément mobile de la soupape (8) de l'ensemble de vidange se prolonge vers le haut et **en ce que** cette partie supérieure prolongée se termine vers le haut par un front venant sensiblement de niveau avec le fond du réservoir lorsque la tête (10) de l'élément mobile de soupape de l'ensemble de vidange est en position fermée.

9. Ensemble selon l'une quelconque des revendications précédentes, **caractérisé en ce que** la partie supérieure de la tête (10) de soupape renferme un capteur de température (26).

10. Ensemble selon l'une quelconque des revendications précédentes, **caractérisé en ce que** la pièce amovible (11) de siège, d'étanchéité et d'écoulement total présente une couronne périphérique métallique pare-flamme (38) destinée à prolonger la durée du maintien de l'étanchéité de l'élément de vidange en cas d'incendie.

11. Ensemble selon la revendication 10, **caractérisé en ce que** la couronne périphérique métallique pare-flamme (38) se prolonge vers le haut par un rebord en épaulement (39).

12. Ensemble selon l'une quelconque des revendications précédentes, **caractérisé en ce qu'**il s'applique à un réacteur chimique à sortie dite avec tubulure (4).

13. Ensemble selon l'une quelconque des revendications 1 à 11, **caractérisé en ce qu'**il s'applique à un réacteur chimique à sortie dite à bride épaisse (5).

## Patentansprüche

1. Auswechselbare, universelle Vorrichtung zum Verschließen und zum Entleeren, die außen auf die Auslassöffnung (6) montiert werden kann, die von einer Stirnfläche (7) begrenzt werden, für einen neuen oder bereits vorhandenen emaillierten Chemiereaktor, vom Typ mit Auslass mit dickem Flansch (5) oder vom Typ mit Rohransatz (4), der auf die Außenkonstruktion dieser Auslassöffnung (6), zu montieren ist Verschlussvorrichtung mit einer Absperrklappe, die ein Kopf (10) - Ventil (8) enthält, das durch eine Bewegung zum oberen Bereich des Kopfes hin, zur Entleerung oder zum Ablassen des Reaktorinhalts geöffnet werden kann, wobei der Kopf (10) des Ventils (8) die Auslassöffnung (6) verschließt, nachdem er wieder nach unten durch abdichtende Lagerung des unteren Teils des Ventilkopfes (10) auf einem abnehmbaren Teil (11) des Abdichtungs- und vollständige Entleerungssitzes bewegt wurde, das ringförmig und flach ist und eine zentrale Öffnung und eine zentrale Hohlform entsprechend einer Aussparung (21) aufweist, wobei sich dieses abnehmbare Sitz-, Abdichtungs- und vollständige Entleerungssteil (11) dicht an der Stirnseite (7) anlegt, die die Außenseite der Auslassöffnung (6) über ein Gegen-Befestigungsteil (12) begrenzt, das das Sitzteil (11) gegen die Stirnseite (7) drückt, die die äußere Auslassöffnung (6) begrenzt, um sie gemäß einer mechanischen Montage einzuklemmen, um gleichzeitig ihre Immobilisierung und Dichtigkeit nach außen, sowie die Befestigung unter der Auslassöffnung (6) auszuführen, wobei dieses abnehmbare Sitz-, Abdichtungs- und vollständige Entleerungssteil (11) in Form einer ringförmigen, flachen Dichtung mit zentraler Öffnung (25) zum vollständigen Ablassen ausgeführt wird, deren oberer Teil hohl ausgebildet ist und mindestens eine Fläche enthält, die zentral nach unten mit mindestens einer Neigungsfläche konvergiert und die eine zentrale Aussparung in abdichtendem Kontakt, in Verschlussposition, mit dem Ventilkopf (10) bildet, **dadurch gekennzeichnet, dass** die Unterseite der Struktur der Auslassöffnung (6), die eine Stirnseite (7) bildet und die Oberfläche der Oberseite des Körpers der Ablassvorrichtung eben sind; dadurch, dass die hohle Ausformung der flachen, ringförmigen Dichtung, die dieses abnehmbare Sitz-, Abdichtungs- und vollständige Entleerungsteils (11) bildet, eine konische Aussparung (21) mit zwei aufeinanderfolgenden konzentrischen konischen Rampen bildet, die von unten nach oben eine erste Rampe (23) und eine zweite Rampe (24) aufweist, die von ihrer Peripherie zur Zentralöffnung (25) hinabführen, wobei die zweite Rampe (24) dazu bestimmt ist, das vollständige Ablassen zu gewährleisten und dass die erste Rampe eine stärkere Neigung hat und eine Schulter bildet, die innen die Zentralöffnung (25) begrenzt, wobei diese erste Rampe dazu dient, den Abdichtungsverschluss durch Kontakt mit einer Zone der kleineren Außenperipherie des Ventilkopfes (10) zu gewährleisten.

2. Vorrichtung gemäß dem vorhergehenden Anspruch, **dadurch gekennzeichnet, dass** die erste Rampe (23), die die Zentralöffnung (25) innen begrenzt, eine geringere Breite hat, als die zweite Rampe (24).

3. Vorrichtung gemäß einem der vorhergehenden Ansprüche, **dadurch gekennzeichnet, dass** sich die abdichtende Kontaktzone zwischen der konischen Aussparung (21) des abnehmbaren Abdichtungs- und vollständige Entleerungs- Sitzteils (11) und der kleinere Außendurchmesser des Ventilkopfes (10) nur über einen Teil dieses Kopfes erstreckt.

4. Vorrichtung gemäß einem der vorhergehenden Ansprüche, **dadurch gekennzeichnet, dass** der Ventilkopf (10) der Entleervorrichtung an seiner Basis eine konische Fläche (22) aufweist, die dicht an der ersten Rampe (23) des abnehmbaren Sitz-, Abdichtungs- und vollständige Entleerungsteils (11) anliegen soll.

5. Vorrichtung gemäß einem der vorhergehenden Ansprüche, **dadurch gekennzeichnet, dass** die doppelte konische Rampe aus einer zentralen konischen Schulter besteht, die den oberen Rand der Zentralöffnung (25) bildet und in dichtem Kontakt den unteren Außenteil des Ventilkopfes (10) abstützt, wobei diese zentrale konische Schulter konzentrisch von einer konischen Form (24) mit geringerem Gefälle umgeben ist, die eine Rampe zur vollständigen Entleerung bildet.

6. Vorrichtung gemäß einem der vorhergehenden Ansprüche, **dadurch gekennzeichnet, dass** das abnehmbare Sitz-, Abdichtungs- und vollständige Entleerungsteil (11) eine ringförmige, innere Armatur (30) aufweist.

7. Vorrichtung gemäß einem der vorhergehenden Ansprüche, **dadurch gekennzeichnet, dass** das abnehmbare Sitz-, Abdichtungs- und vollständige Entleerungsteil (11) eine ringförmige, externe Armatur (27) in der Form verstärkter Zonen, oder Umfangsunterlegscheiben, jeweils eine auf der Ober-und der Unterseite, aufweist.

8. Vorrichtung gemäß einem der vorhergehenden Ansprüche, **dadurch gekennzeichnet, dass** sich der Kopf (10) des beweglichen Elementes des Ventils (8) der Entleervorrichtung nach oben verlängert und dass dieser obere, verlängerte Teil nach oben durch eine Stirnseite endet, die deutlich auf gleichem Niveau ist, wie der Behälterboden, wenn sich der Kopf (10) des beweglichen Ventilteils der Entleervorrichtung in geschlossener Position befindet.

9. Vorrichtung gemäß einem der vorhergehenden Ansprüche, **dadurch gekennzeichnet, dass** der obere Teil des Ventilkopfes (10) einen Temperaturfühler (26) umschließt.

10. Vorrichtung gemäß einem der vorhergehenden Ansprüche, **dadurch gekennzeichnet, dass** das abnehmbare Sitz-, Abdichtungs- und vollständige Entleerungsteil (11) einen umlaufenden, metallischen Brandschutzkranz (38) aufweist, mit dem die Dichtigkeit des Entleerelementes im Brandfall verlängert werden kann.

11. Vorrichtung gemäß Anspruch 10, **dadurch gekennzeichnet, dass** sich der umlaufende, metallische Brandschutzkranz (38) nach oben durch einen Schulterrand (39) verlängert.

12. Vorrichtung gemäß einem der vorhergehenden Ansprüche, **dadurch gekennzeichnet, dass** sie bei einem Chemiereaktor mit sogenanntem Rohransatz (4) angewandt wird.

13. Vorrichtung gemäß einem der Ansprüche 1 bis 11, **dadurch gekennzeichnet, dass** sie bei einem Chemiereaktor mit sogenanntem Auslass mit dickem Flansch (5) angewandt wird.

## Claims

1. Interchangeable and universal shutoff and drainage assembly that can be mounted on the exterior of the outlet aperture (6) bounded by a frontal surface (7) for a new or existing enameled chemical reactor of the type with a thick-flange outlet (5) or of the type with a tubing assembly (4), to be mounted on the external structure of this outlet aperture (6), the which shutoff assembly incorporates a valve including a flap valve (8) with a head (10) opening via an upward movement of its head for the emptying or drainage of the content of the reactor, with the head (10) of the flap valve (8) closing the outlet aperture (6) after its downward movement, by the sealing pressure of the lower base of the flap valve head (10) on a removable part (11) of the total flow and sealing seat, which is ring-shaped and flat, and has a central opening and a hollow central shape matching a void (21); this removable part (11) of the total flow and sealing seat presses flat against and seals the front face (7) bounding the exterior of the outlet aperture (6), by means of a mounted matching component (12) that places the seat part (11) against the front face (7) bounding the exterior outlet aperture (6), so as to tighten it in accordance with a mechanical mounting, in view of producing both its immobilization and impermeability from the exterior, as well as the securing under the aperture (6), with the total flow and sealing removable seat part (11) being implemented in the form of a flat ring-shaped seal with central opening (25) for total flow, of which the upper part has a hollow shape including at least one surface converging centrally downwards, with at least one gradient, and forming a central void in sealing contact, in the shutoff position, with the flap valve head (10), **characterized in that** the bottom face of the outlet aperture (6) structure forming a frontal surface (7) and the surface of the upper face of the body of the drainage assembly are flat, **in that** the hollow shape of the flat ring-shaped seal forming the total flow and sealing removable seat part (11) is a conical void (21) with two successive and concentric ramps having, from top to bottom, a first ramp (23) and a second ramp (24) descending from their periphery towards the central opening (25), with the second ramp (24) being adapted to ensure total flow, and **in that** the first ramp has a steeper gradient and forms a shoulder that internally bounds the central opening (25), with this first ramp being provided to ensure a sealing closure by contact with an area of the exterior bottom periphery of the flap valve (10) head.

2. Assembly according to the preceding claim, **characterized in that** the first ramp (23) internally bounding the central opening (25) is of smaller width than the second ramp (24).

3. Assembly according to any of the preceding claims, **characterized in that** the sealing contact area between the conical void shape (21) of the total flow and sealing removable seat part (11) and the exterior bottom periphery of the flap valve head (10) only extends over part of it.

4. Assembly according to any of the preceding claims, **characterized in that** the flap valve (10) head of the drainage assembly has, at its base, a conical surface (22) that provides a seal on the first ramp (23) of the total flow and sealing removable seat part (11).

5. Assembly according to any of the preceding claims, **characterized in that** the conical double ramp incorporates a central conical shoulder forming the upper edge of the central opening (25) accommodating - with sealing contact - the exterior bottom part of the flap valve (10) head, with this central conical shoulder being concentrically surrounded by a conical shape (24) of shallower gradient, forming a total flow ramp.

6. Assembly according to any of the preceding claims, **characterized in that** the total flow and sealing removable seat part (11) has an internal ring-shaped armature (30).

7. Assembly according to any of the preceding claims, **characterized in that** the total flow and sealing removable seat part (11) has an exterior ring-shaped armature (27) in the form of reinforced areas or peripheral washers on each of its upper and bottom faces.

8. Assembly according to any of the preceding claims, **characterized in that** the head (10) of the moving part of the flap valve (8) of the drainage assembly extends upwards, and **in that** this extended upper part is terminated at the top with a front that is essentially level with the bottom of the vessel when the head (10) of the moving part of the valve of the drainage assembly is in the closed position.

9. Assembly according to any of the preceding claims, **characterized in that** the upper part of the flap valve head (10) incorporates a temperature sensor (26).

10. Assembly according to any of the preceding claims, **characterized in that** the removable part (11) of the total flow and sealing seat has a flame-retarding metal peripheral crown (38) adapted to extend the duration of conservation of the sealing of the drainage assembly in the event of fire.

11. Assembly according to claim 10, **characterized in that** the flame-retarding metal peripheral crown (38) is extended by a shoulder rim (39) at the top.

12. Assembly according to any of the preceding claims, **characterized in that** it is applied to a chemical reactor with a so-called tubular assembly (4) outlet.

13. Assembly according to any of claims 1 to 11, **characterized in that** that it is applied to a chemical reactor with a so-called thick flange (5) outlet.
